# EUROPEAN PATENT SPECIFICATION

(11) **EP 1 395 365 B1**
(45) Date of publication and mention of the grant of the patent: **23.08.2006**
(21) Application number: 02732042.3
(22) Date of filing: 04.06.2002
(51) Int. Cl.: B01L 3/00, B01L 3/02

(54) **MULTI-LAYER MICROFLUIDIC SPLITTER**
MEHRLAGIGE MIKROFLUIDISCHE VERTEILUNGSVORRICHTUNG
COLONNE DE SEPARATION DE MICROFLUIDES MULTICOUCHE

(30) Priority: 07.06.2001 US 296882 P; 07.06.2001 US 296897 P; 02.05.2002 US 139060
(43) Date of publication of application: 10.03.2004
(73) Proprietor: Nanostream, Inc., Pasadena, CA 91107 (US)
(72) Inventor: KARP, Christoph, D., Pasadena, CA 91107 (US)
(74) Representative: Viering, Jentschura & Partner
(86) International application number: PCT/US2002/017834
(87) International publication number: WO 2002/100544

(56) References cited:
- WO-A-01/08799
- WO-A-99/43432
- US-B1- 6 167 910

## Description

### Field Of The Invention

The present invention relates to the controlled splitting of fluid volumes in microfluidic conduits.

### Backgiround Of The Invention

There has been a growing interest in the manufacture and use of microfluidic systems for the acquisition of chemical and biological information. In particular, when conducted in microfluidic volumes, complicated biochemical reactions may be carried out using very small volumes of liquid. Among other benefits, microfluidic systems improve reaction response times, minimize sample volume, and lower reagent consumption. When volatile or hazardous materials are used or generated, performing reactions in microfluidic volumes also enhances safety and reduces disposal quantities.

Traditionally, microfluidic devices have been constructed in a planar fashion using techniques that are borrowed from the silicon fabrication industry. Representative systems are described, for example, in some early work by Manz *et al*. (Trends in Anal. Chem. (1990) 10(5): 144-149; Advances in Chromatography (1993) 33: 1-66). In these publications, microfluidic devices are constructed by using photolithography to define channels on silicon or glass substrates and etching techniques to remove material from the substrate to form the channels. A cover plate is bonded to the top of the device to provide closure. Miniature pumps and valves can also be constructed to be integral (e.g., within) such devices. Alternatively, separate or off-line pumping mechanisms are contemplated.

More recently, a number of methods have been developed that allow microfluidic devices to be constructed from plastic, silicone or other polymeric materials. In one such method, a negative mold is first constructed, and plastic or silicone is then poured into or over the mold. The mold can be constructed using a silicon wafer (see, e.g., Duffy *et al*., Analytical Chemistry (1998) 70: 4974-4984; McCormick *et. al*., Analytical Chemistry (1997) 69: 2626 -2630), or by building a traditional injection molding cavity for plastic devices. Some molding facilities have developed techniques to construct extremely small molds. Components constructed using a LIGA technique have been developed at the Karolsruhe Nuclear Research center in Germany (see, e.g., Schomburg *et al*., Journal of Micromechanical Microengineering (1994) 4: 186-191), and commercialized by MicroParts (Dortmund, Germany). Jenoptik (Jena, Germany) also uses LIGA and a hot-embossing technique. Imprinting methods in PMMA have also been demonstrated (see, Martynova *et al*., Analytical Chemistry (1997) 69: 4783-4789) However, these techniques do not lend themselves to rapid prototyping and manufacturing flexibility. Moreover, the tool-up costs for both of these techniques are quite high and can be cost-prohibitive.

Most significantly, the foregoing references teach only the preparation of planar microfluidic structures. Various conventional tools and combinations of tools are used when performing biochemical synthesis and analysis in conventional macroscopic volumes. Such tools include, for example: metering devices, reactors, valves, heaters, coolers, mixers, splitters, diverters, cannulas, filters, condensers, incubators, separation devices, and catalyst devices. Attempts to perform these activities in microfluidic volumes have been stifled by difficulties in making tools such tools at a microfluidic scale and then integrating such tools into microfluidic devices.

One particular difficulty is accurately measuring or metering the microfluidic aliquots of fluids needed to perform analysis and synthesis on a microfluidic scale. As a result of the very small dimensions of microfluidic structures, fluids moving through such structures are characterized by very low Reynolds Numbers corresponding to laminar flow and flow dynamics heavily affected, if not dominated, by surface interactions. Thus, fluids in microfluidic structures often exhibit surprising and unexpected properties. For example, when fluids traveling through a microfluidic structure encounter a symmetrical-looking split or fork in a channel, the fluid may flow through only one fork or only the other - not splitting evenly between the two, as would be expected from macrofluidic fluid flow. Alternatively, the flow may split, but not evenly.

As a consequence of this behavior, it can be difficult to use microfluidic devices to consistently and accurately meter pre-determined microfluidic volumes, simply because it may be difficult to predict where in a microfluidic structure a given fluid will flow. This problem may be exacerbated by the need to provide a large number of equal microfluidic volumes to, for example, a well plate. This is because the difficulty in predicting the behavior of one fluid flow path within the structure may be multiplied by the number of wells in the well plate to which samples must be delivered.

Planar microfluidic splitters have been developed that may predictably divide fluid flows from a central inlet to a plurality of outputs along one edge of the planar device. However, the microfluidic structures within such splitters are restricted to a single plane. Thus, these splitters may require a large area or "footprint" to perform the number of splits required to provide the number of samples required by a typical well plate, which may have ninety-six, three hundred eighty-four, or even more wells. This is because fluid channels in such devices cannot overlap without the fluids in each channel mixing or "cross-communicating", thus limiting the extent to which the microfluidic structures within the device can be convoluted or turned back upon themselves. Moreover, such a planar microfluidic device, while able deliver pre-measured samples to a single row or column of a well plate, cannot be used to simultaneously deliver samples to the entire two dimensional array of wells in a well plate. Planar devices thus require numerous repetitive actions to fully utilize the well plate as the one-dimensional planar splitter is moved from row to row or column to column.

Thus, it would be desirable to provide microfluidic tools that accurately and consistently splits or meters one or more pre-determined microfluidic volumes into smaller volumes. It would also be desirable to provide microfluidic tools that accurately and consistently split or meter pre-determined microfluidic volumes to a two dimensional array of wells in a well plate.

### Summary Of The Invention

In a first separate aspect of the invention, a multi-layer microfluidic splitting device comprises a first device layer defining an inlet port, a second device layer defining a plurality of outlet ports and a plurality of channel-containing device layers disposed between the first device layer and the second device layer. Each channel-containing device layer defines a plurality of branch channel segments. A plurality of overlap regions permits fluid communication between at least two branch channel segments defined in different device layers. The branch channel segments define a plurality of plurality of continuous flow paths between the inlet port and the plurality of outlet ports. Each continuous flow path of the plurality of continuous flow paths has a fluidic impedance, a path length, and a geometric structure. The fluidic impedance of each continuous flow path of the plurality of continuous flow paths is substantially equal.

These and other aspects and advantages of the present invention will become apparent to one skilled in the art upon reviewing the description, drawings, and appended claims.

### Brief Description Of The Drawings

FIG. 1A is a top view of a multi-layer microfluidic splitter according to a first embodiment of the present invention.
FIG. 1 B is an exploded perspective view of the multi-layer microfluidic splitter of FIG. 1A.
FIG. 2A is a top view of a multi-layer microfluidic splitter according to a second embodiment of the present invention.
FIG. 2B is an exploded perspective view of the multi-layer microfluidic splitter of FIG. 2A.
FIG. 3A is an exploded perspective view of a portion of the multi-layer microfluidic splitters of either FIG. 1A according to a first alternative embodiment.
FIG. 3B is an exploded perspective view of a portion of the multi-layer microfluidic splitters of either FIG. 1A according to a second alternative embodiment.

### Detailed Description

### Definitions

The term "channel" or "chamber" as used herein is to be interpreted in a broad sense. Thus, it is not intended to be restricted to elongated configurations where the transverse or longitudinal dimension greatly exceeds the diameter or cross-sectional dimension. Rather, such terms are meant to comprise cavities or tunnels of any desired shape or configuration through which liquids may be directed. Such a fluid cavity may, for example, comprise a flow-through cell where fluid is to be continually passed or, alternatively, a chamber for holding a specified, discrete ratio of fluid for a specified ratio of time. "Channels" and "chambers" may be filled or may contain internal structures comprising, for example, valves, filters, and similar or equivalent components and materials.

The term "microfluidic" as used herein is to be understood, without any restriction thereto, to refer to structures or devices through which fluid(s) are capable of being passed or directed, wherein one or more of the dimensions is less than 500 microns. Additionally, such devices can be constructed using any of the materials described herein, as well as combinations of such materials and similar or equivalent materials.

The term "self-adhesive tape" as used herein refers to a material layer or film having an integral adhesive coating on one or both sides.

The term "stencil" as used herein refers to a preferably substantially planar material layer or sheet through which one or more variously shaped and oriented portions have been cut or removed through the entire thickness of the layer, and which removed portions permit substantial fluid movement within the layer (as opposed to simple through-holes or vias for transmitting fluid from one layer to another layer). The outlines of cut or removed portions form the lateral boundaries of microstructures that are formed when a stencil is sandwiched between other layers such as substrates or other stencils.

### Microfluidic device fabrication

In a preferred embodiment, microfluidic devices are constructed using stencil layers to define structures such as channels and/or chambers by removing material through the entire thickness of the layer. A stencil layer is preferably substantially planar and has a channel or chamber cut through the entire thickness of the layer. For example, a computer-controlled plotter modified to accept a cutting blade may be used to cut various patterns through a material layer. Such a blade may be used either to cut sections to be detached and removed from the stencil layer, or to fashion slits that separate regions in the stencil layer without removing any material. Alternatively, a computer-controlled laser cutter may be used to cut portions through a material layer. While laser cutting may be used to yield precisely-dimensioned microstructures, the use of a laser to cut a stencil layer inherently involves the removal of some material. Further examples of methods that may be employed to form stencil layers include conventional stamping or die-cutting technologies. The above-mentioned methods for cutting through a stencil layer or sheet permits robust devices to be fabricated quickly and inexpensively compared to conventional surface micromachining or material deposition techniques that are conventionally employed to produce microfluidic devices.

After a portion of a stencil layer is cut or removed, the outlines of the cut or otherwise removed portions form the lateral boundaries of microstructures that are completed upon sandwiching a stencil between substrates and/or other stencils. The thickness or height of the microstructures such as channels or chambers can be varied by altering the thickness of the stencil layer, or by using multiple substantially identical stencil layers stacked on top of one another. When assembled in a microfluidic device, the top and bottom surfaces of stencil layers are intended to mate with one or more adjacent layers (such as stencil layers or substrate layers) to form a substantially enclosed device, typically having at least one inlet port and at least one outlet port.

A wide variety of materials may be used to fabricate microfluidic devices using sandwiched stencil layers, including polymeric, metallic, and/or composite materials, to name a few. In a preferred embodiment, at least one polymeric material is used in fabricating such a device. Additionally, microfluidic devices may be partially or substantially filled with various filling materials including but not limited to filters; catalysts; and/or separation media including beads, granules, or various porous materials. Filling materials may be added either before or after assembly of such a device.

Various means may be used to seal or bond layers of a device together. For example, adhesives may be used. In one embodiment, one or more layers of a device may be fabricated from single- or double-sided adhesive tape, although other methods of adhering stencil layers may be used. A portion of the tape (of the desired shape and dimensions) can be cut and removed to form channels, chambers, and/or apertures. A tape stencil can then be placed on a supporting substrate with an appropriate cover layer, between layers of tape, or between layers of other materials. In one embodiment, stencil layers can be stacked on each other. In this embodiment, the thickness or height of the channels within a particular stencil layer can be varied by varying the thickness of the stencil layer (e.g., the tape carrier and the adhesive material thereon) or by using multiple substantially identical stencil layers stacked on top of one another. Various types of tape may be used with such an embodiment. Suitable tape carrier materials include but are not limited to polyesters, polycarbonates, polytetrafluoroethlyenes, polypropylenes, and polyimides. Such tapes may have various methods of curing, including curing by pressure, temperature, or chemical or optical interaction. The thicknesses of these carrier materials and adhesives may be varied.

One or more materials may be advantageously used to coat, seal, and/or adhere portions of microstructures within such devices. Use of various materials, including polymers, and coatings, provide for microfluidic devices that can accommodate the use of a wide range of liquid reagents or solutions.

Notably, stencil-based fabrication methods enable very rapid fabrication of devices, both for prototyping and for high-volume production, with minimal tool-up costs. Rapid prototyping is invaluable for trying and optimizing new device designs, since designs may be quickly implemented, tested, and (if necessary) modified and further tested to achieve a desired result. The ability to prototype devices quickly with stencil fabrication methods also permits many different variants of a particular design to be tested and evaluated concurrently.

In addition to the use of adhesives and the adhesiveless bonding method discussed above, other techniques may be used to attach one or more of the various layers of microfluidic devices useful with the present invention, as would be recognized by one of ordinary skill in attaching materials. For example, attachment techniques including thermal, chemical, or light-activated bonding steps; mechanical attachment (such as using clamps or screws to apply pressure to the layers); ultrasonic attachment; and/or other equivalent coupling methods may be used.

Other manufacturing methods not relying on sandwiched stencils may be used to construct microfluidic devices according to the present invention. For example, such devices may be constructed using well-known techniques such as molding, etching, embossing, stamping, soft lithography, or other micromachining techniques of flexible or rigid materials. An example of a specific technique that may be used to produce microfluidic devices according to the present invention is the silicone rubber replication technique discussed in Duffy et al., Analytical Chemistry (1988) 70:4974-4984. Rigid materials that could be used to construct nonplanar devices according to the present invention include, but are not limited to, silicon, glass, rigid polymers, and hybrids of polymers and other materials.

The microfluidic devices described herein are preferably 'generic' in that they are modular and can be easily reconfigured into or adapted to any design. In addition, these devices are preferably capable of being used with a variety of pumping and valving mechanisms, including pressure, peristaltic pumping, electrokinetic flow, electrophoresis, vacuum and the like. In addition, microfluidic devices according to the present invention may be used in collaboration with optical detection (e.g., fluorescence, phosphorescence, luminescence, absorbance and colorimetry), electrochemical detection, and any of various suitable detection methods including visual detection. Suitable detection methods will depend on the geometry and composition of the device. The choice of such detection methods will be within the purview of the skilled artisan.

### Preferred microfluidic devices

It has been observed that fluid flow behavior within microfluidic structures may be influenced by the fluidic impedance encountered by the fluid. The existence or magnitude of fluidic impedance depends on a number of factors, such as interaction between the fluid and the surface of the structure ("surface interactions"); the pressure driving the fluid ("fluid pressure"); the pressure resisting fluid flow ("backpressure"); the physical arrangement of the microfluidic structure ("structural geometry"); and the characteristics of the fluid, including, but not limited to, mass, density, and viscosity ("fluid properties"). In particular, it has been noted that fluids being split from a single source or inlet (which may be a port, aperture or channel) into a plurality of branch channels tend to split evenly among the branch channels only when the impedance encountered by the fluid is substantially the same across all of the branch channels into which the fluid is being divided. It should be understood that each branch channel may act as an inlet channel for further splitting of the fluid.

In one aspect of the present invention, a preferred means of providing substantially the same impedance among multiple branch channels is to present to the fluid substantially identical structural geometries at any point at which an inlet channel encounters one or more branch channels ("branching junction"). Thus, a fluid encountering a branching junction will be directed into a plurality of branch channels, each presenting a substantially identical geometric interface to the inlet channel. The structural geometry includes such factors as the length of the branch channel, diameter of the interface, changes in direction and angle of the fluid flow, etc. In a preferred embodiment, such substantial identity of structural geometry may provided by means of a topologically symmetrical geometric structure.

Alternatively, even splitting may be provided with asymmetrical structures where impedance matching is achieved by altering the other factors noted above. For instance, back-pressure may varied from one branch channel to another branch channel.

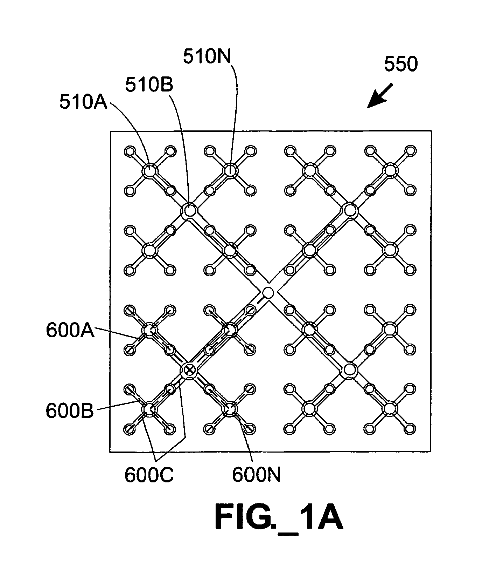

In a preferred embodiment, a compact, three-dimensional splitting device for splitting a fluid sample into a large number of aliquots, or for splitting a fluid stream into a large number of substreams, is provided. Referring to FIGS. 1A-1B, a high-density splitting device 550 is constructed in seven layers, preferably using polymeric materials. Fluid is communicated between the apertures and channel segments of each layer at overlap regions 510. The first layer 551 defines a central inlet port 558. The second layer 552 defines four branch channel segments 559A-559N intersecting under the inlet port 558 at an overlap region 510. The third layer 553 defines four apertures 560 positioned under the distal ends of the branch channel segments 559A-559N. The fourth layer 554 defines four groups of four (sixteen in total) branch channel segments 561A-561N, with each group intersecting below the apertures 560 at additional overlap regions 510. The fifth layer 555 defines sixteen apertures 562 positioned under the distal ends of the sixteen branch channel segments 561A-561N. The sixth layer 556 defines sixteen groups of four (sixty-four in total) branch channel segments 563A-563N, with each group intersecting below the apertures 562 at further overlap regions 510. The seventh layer defines sixty-four apertures 564A-564N positioned under the distal ends of the branch channel segments 563A-563N. It should be understood that each of the "upstream" branch channel segments 559A-559N, 561A-561N act as inlet channels for downstream branch channel segments (i.e., branch channel segments 561A-561 N, 563A-563N, respectively).

Thus, the arrangement of device layers 551-557 creates a plurality of continuous fluid flow paths 600A-600n (shown as ghosted lines) between the central inlet port 558 and the sixty-four output apertures 564A-564n. Each of these continuous fluid flow paths 600A-600n has the substantially the same length. It should be understood that additional fluid flow paths (not shown) may be provided that are not substantially the same length. For example, it may be desirable to provide a waste channel (not shown) to remove excess fluid, which need not present the same impedance to the fluid flow.

Many of the branch channel segments 559A-559N, 561A-561N, 563A-563N have portions that are co-linear. Thus, if the device layers 552, 554, 556 were adjacent to each other, fluid would pass between the branch channel segments 559A-559N, 561A-561N, 563A-563N, essentially rendering the device inoperable. Thus, device layers 553, 555 act as spacers to prevent fluid communication between channel-containing device layers 552, 554, 556 and the co-linear portions of the of the branch channel segments 559A-559N, 561A-561N, 563A-563N defined therein. Notably, the portions 570 of the spacer device layers 553, 555 separating the co-linear branch channel segments are substantially impermeable to fluid flow. At the same time, a solid spacer device layer 553, 555 would block any flow between the branch channels segments 559A-559N, 561A-561N, 563A-563N, again rendering the device inoperable. Thus, the spacer device layers 553, 555 define apertures 560, 562, which are positioned at the overlap regions 510 of the device 550 to allow fluid to communicate through the branch channel segments 559A-559N, 561A-561N, 563A-563N so as to form the continuous flow paths 600A-600N.

In operation, a sample is injected into the central inlet port 558, and is split repeatedly to ultimately form sixty-four aliquots having approximately equal volumes. Outlet ports (not shown) may be provided in the seventh layer 557 to output the aliquots (or substreams) to another location within or outside the device 550. A device 550 was constructed from square layers having side lengths of two and one-quarter inches, providing a splitter density twelve and six tenths chambers per square inch, or one and ninety-three one hundredth chambers per centimeter squared.

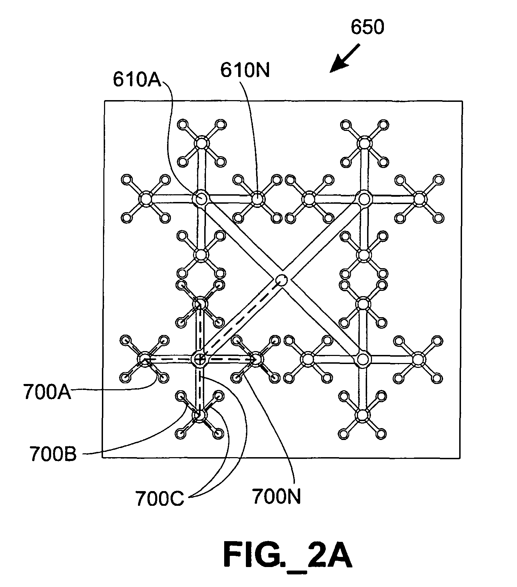

It should be understood that various channel geometries and numbers of device layers may be used by one skilled in the art to obtain the desired result. For example, FIGS. 2A-2B illustrate a structure in accordance with the present invention similar to that shown in FIGS. 1A-1B, except in FIGS. 2A-2B, the branch channel segments 561A-561N, 563A-563N of FIGS. 1A-1B are rotated by about forty-five degrees (see branch channel segments 660, 662, 664). In this manner, the intermediate spacer layers 553, 555 of the device 550 may be eliminated. Thus, the device 650 maintains equal path length continuous flow paths 700A-700N between inlet port 658 and outlet ports 666A-666N by rotating branch channel segments 660A-660N, 662A-662N, 664A-664N (relative to branch channel segments 559A-559N, 561A-561N, 563A-563N). Because branch channel segments 660A-660N, 662A-662N, 664A-664N are not co-linear, spacer device layers are not necessary to prevent undesirable fluid communication between the branch channel segments 660A-660N, 662A-662N, 664A-664N, although spacer device layers may be used for other desirable purposes.

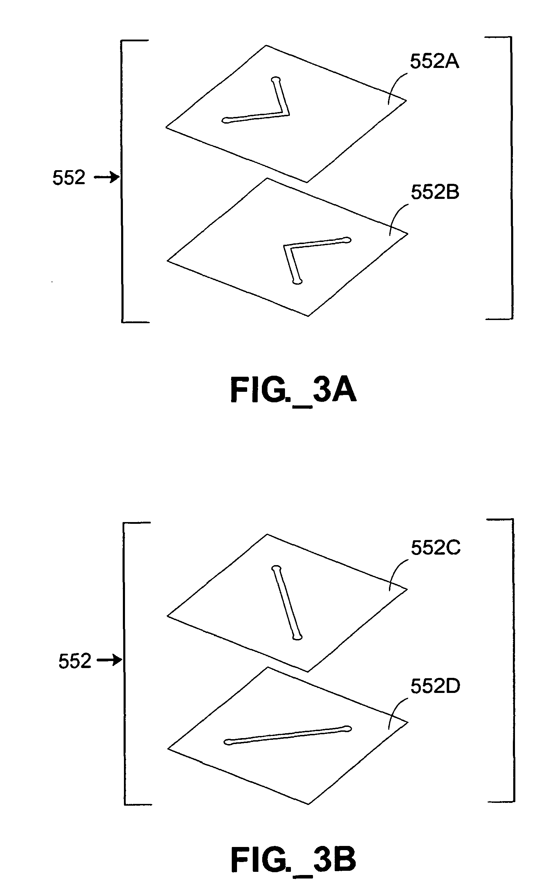

In another preferred embodiment, structures in a single layer, such as the branch channel segments 559A-559n in the device layer 552 of the device 550 illustrated in FIG. 1A may be divided into two device layers, such as device layers 552A, 552B or 552C, 552D as shown in FIGS. 3A and 3B, or any number of device layers and/or branch channel segments as may be desired. Also, any number of fluid splits may be performed. For example, the branch channel segments of a structure (not shown) may divide the flow into three, six, eight or any desired number of branch channels. In this manner, microfluidic splitters may be provided which divide a fluid into any desired number of aliquots or substreams to be made compatible with existing or new geometries of well plates or other fluidic devices, laboratory tools, or instruments.

The use of multiple layers or three dimensions to accomplish splitting may be used to create more precisely divided aliquots or substreams than are possible with two-dimensional splitting devices. This is because precise splitting requires the presence of substantially similar fluidic impedances across the branch channels. In two-dimensional structures, such impedances are usually created by altering the volume of the branch channels at some point in their length, typically done by narrowing or constricting the branch channel by some predetermined amount. Such constrictions are difficult to replicate identically across a large number of branch channels defined in a single layer. Thus, high-tolerance manufacturing processes may be required, which lengthen and complicate the manufacturing process.

In contrast, three-dimensional structures can take advantage of the impedance that typically arises at an interface or overlap region where two channel segments defined in different device layers overlap, such as the overlap regions 510 shown in FIG. 1A. Because the impedance at such overlaps arises as a result of the overlap itself, the only tolerance issue arises in the alignment of the device layers. It has been found that such tolerances are substantially less critical than those required to provide equally accurate planar devices using micromachining or etching techniques.

Providing impedances between channel segments within a common flow path is particularly advantageous to promote consistent and repeatable splitting of a liquid sample when the sample is first provided to the device. In the absence of such impedance regions, an advancing liquid fluid front may not repeatably fill all interconnected branch channel segments in a single generation of branch channels before advancing to fill subsequent generations. Rather, if one attempts to split a developing liquid flow (i.e. the advancing interface between a liquid and a gas such as air contained within an empty device) without using impedance regions, what typically results is that one or more branch channels intended to receive liquid do not receive such liquid. In both devices 550, 650 illustrated in FIGS. 1A-2B, the overlaps between branch channel segments sufficiently impede an initial flow of liquid through the overlap to overcome this problem. Such impedance results from an overlap region that includes channel segments defined in adjacent layers, and from an overlap region that includes channel segments defined in non-adjacent device layers separated by an intermediate spacer device layer having an aperture co-located with the overlap region to permit fluid communication therethrough. The effect of either type of overlap region is to impede an initial flow of liquid sufficiently to cause all interconnected branch channels defined in a particular layer (or "generation" of branch channels) to fill before the fluid "breaks through" any overlap region to flow into a downstream branch channel defined in a different device layer.

Moreover, three-dimensional devices allow significant increases in microfluidic structure density, which may be desirable to maintain compatibility with existing laboratory equipment, such as well-plates, as well as to minimize the "footprint" associated with the microfluidic device. A three-dimensional network formed in multiple layers of a microfluidic device allows branch channels to be densely packed and even to overlap (as discussed above with reference to the co-linear portions of branch channel segments 559A-559N, 561A-561N, 563A-563N) without any undesirable fluid cross-communication (i.e., mixing of fluids between channels at points other than the apertures intended by design to provide fluid communication between the channels).

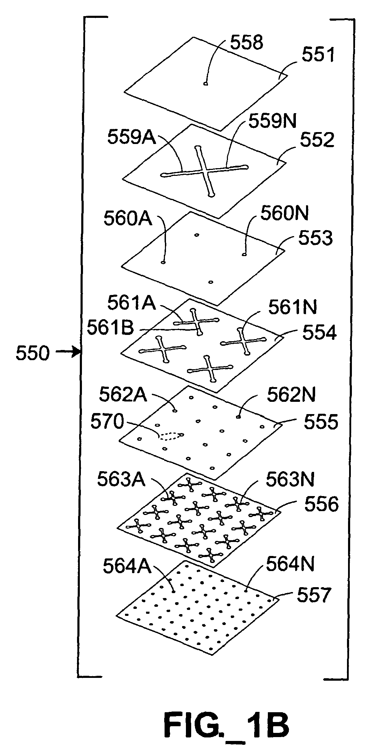

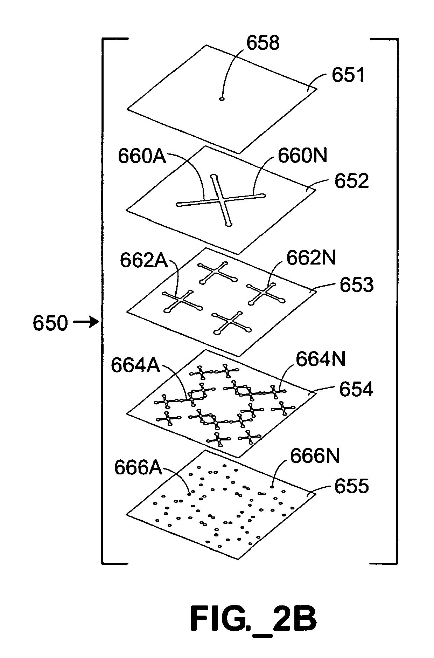

Multi-layer microfluidic splitters in accordance with the present invention allow splitting of the fluid sample into a plurality of substantially equal microfluidic volumes by presenting a fluid sample in an inlet with a branching junction to a plurality of branch channels, each having substantially the same fluidic impedance. In a preferred embodiment, substantial identity of impedance results from the topological symmetry of the structural geometry. For example, referring to FIGS. 1B and 2B, it may be observed that the length of any continuous flow path 600A-600N, 700A-700N between the inlet aperture 558, 658 and any of the outlet apertures 564A-564N, 666A-666N is identical, regardless of the position of any outlet aperture 564A-564N, 666A-666N relative to the inlet aperture 558, 658. Thus, each flow path 600A-600N, 700A-700N between any outlet aperture 564A-564N, 666A-666N and inlet port 558, 658 is topologically symmetrical to any other each flow path between any other outlet aperture 564A-564N, 666A-666N and inlet port 558, 658. Such a topologically symmetrical structure is preferably fabricated in three dimensions for a variety of reasons.

In particular, the high feature density that is desirable in a microfluidic structure would be difficult to manufacture in a single layer. For example, the device 650 of FIG. 2B shows a number of closely adjacent feature regions 651. Such regions are difficult to manufacture using conventional techniques due to the close tolerances required to avoid fluid cross-communication between channels. Moreover, a structure such as that shown in FIG. 2B distributes aliquots or substreams in an asymmetrical pattern. It is desirable to deliver aliquots in an evenly distributed, symmetrical pattern, such as that shown in FIG. 1B, to maintain compatibility with conventional well plates and other laboratory equipment as well as to use space most efficiently. One characteristic of structures that deliver aliquots in evenly distributed patterns is that portions of branch channels will necessarily overlap and/or be co-linear. If such branch channels were provided in a single device layer, the structure would be inoperable because fluids in different channels would mix at the overlap (or, if co-linear only one channel could exist, where more than one channel would be necessary to maintain equal continuous flow path lengths), interfering with measurement accuracy and predictability of fluid flow or simply rendering the device inoperable. By distributing the branches over a plurality of device layers, additional non-permeable spacer device layers may be interposed between layers having overlapping or co-linear branch channels, thus preserving the integrity of the fluid flow in each branch channel. Appropriately positioned apertures in the impermeable spacer device layers would allow fluid to communicate through the branch channels on different layers, thus forming the desired continuous flow paths.

Furthermore, it would be difficult to provide a large number of topologically symmetrical channels in a single layer (e.g. in a conventional two-dimensional device). Channels between the inlet and nearby outlets would have to be heavily convoluted in order to have the same length as channels to outlet further from the inlet. Thus, channels to distant outlets would have to be convoluted to go around the convolution of other channels. The result would likely be an extremely complex device that would be difficult to validate. Alternatively, channels could be constricted to maintain similar impedances across channels of differing lengths. As noted above, however, providing accurate channel impedances with constrictions complicates the manufacturing process.

It is to be understood that the illustrations and descriptions of views of individual microfluidic tools, devices and methods provided herein are intended to disclose components that may be combined in a working device. Various arrangements and combinations of individual tools, devices, and methods provided herein are contemplated, depending on the requirements of the particular application. The particular microfluidic tools, devices, and methods illustrated and described herein are provided by way of example only, and are not intended to limit the scope of the invention.

## Claims

1. A multi-layer microfluidic splitting device (550, 650) comprising:
a first device layer (551, 651) defining an inlet port (558, 658);
a second device layer (557, 655) defining a plurality of outlet ports (564A-564N, 666A-666N);
a plurality of channel-containing device layers (552, 554, 556) disposed between the first device layer and the second device layer, each channel-containing device layer (552, 554, 556) defining a plurality of branch channel segments (559A-559N, 561A-561N, 563A-563N, 660A-660N, 662A-662N, 664A-664N); and,
a plurality of overlap regions (510A-510N, 610A-610N), each overlap region permitting fluid communication between at least two branch channel segments (559A-559N, 561A-561N, 563A-563N, 660A-660N, 662A-662N, 664A-664N) defined in different device layers (552, 554, 556);
wherein the branch channel segments (559A-559N, 561A-561N, 563A-563N, 660A-660N, 662A-662N, 664A-664N) define a plurality of continuous flow paths (600A-600N, 700A-700N) between the inlet port and the plurality of outlet ports, each continuous flow path (600A-600N, 700A-700N) of the plurality of continuous flow paths (600A-600N, 700A-700N) having a fluidic impedance, a path length, and a geometric structure; and,
wherein the fluidic impedance of each continuous flow path (600A-600N, 700A-700N) of the plurality of continuous flow paths (600A-600N, 700A-700N) is substantially equal.

2. The multi-layer microfluidic splitting device (550, 650) of claim 1, further comprising at least one spacer device layer (552, 554, 556) defining a plurality of apertures (560A-560N, 562A-562N), each aperture (560A-560N, 562A-562N) of the plurality of apertures (560A-560N, 562A-562N) disposed at an overlap region of the plurality of overlap regions (510A-510N, 610A-610N), wherein the at least one spacer device layer (552, 554, 556) has at least one impermeable region (570) disposed between portions of two continuous flow paths (600A-600N, 700A-700N) of the plurality of continuous flow paths (600A-600N, 700A-700N).

3. The multi-layer microfluidic splitting device (550, 650) of claim 1, wherein the plurality of channel-containing device layers (552, 554, 556) includes at least two co-linear continuous flow paths (600A-600N, 700A-700N), the device further comprising at least one spacer device layer (552, 554, 556) defining a boundary (570) between the at least two co-linear fluid flow paths (600A-600N, 700A-700N).

4. The multi-layer microfluidic splitting device (550, 650) of any of the preceding claims wherein each overlap region of the plurality of overlap regions (510A-510N, 610A-610N) impedes an initial flow of a liquid through the overlap region of the plurality of overlap regions (510A-510N, 610A-610N).

5. The multi-layer microfluidic splitting device (550, 650) of any of the preceding claims wherein the path length of each continuous flow path of the plurality of continuous flow paths (600A-600N, 700A-700N) is substantially equal.

6. The multi-layer microfluidic splitting device (550, 650) of any of the preceding claims wherein the geometric structure of each continuous flow path of the plurality of continuous flow paths (600A-600N, 700A-700N) is substantially topologically symmetrical.

7. The multi-layer microfluidic splitting device (550, 650) of any of the preceding claims wherein the plurality of outlet ports (564A-564N, 666A-666N) forms a two-dimensional array (564A-564N, 666A-666N).

8. The multi-layer microfluidic splitting device (550, 650) of any of the preceding claims wherein each channel-containing device layer (552, 554, 556) of the plurality of channel-containing device layers (552, 554, 556) is fabricated with a polymeric material.

9. The multi-layer microfluidic splitting device (550, 650) of any of the preceding claims wherein any channel-containing device layer (552, 554, 556) of the plurality of channel-containing device layers (552, 554, 556) is fabricated with self-adhesive tape.

10. The multi-layer microfluidic splitting device (550, 650) of any of the preceding claims wherein at least one of the plurality of channel-containing layers (552, 554, 556) is a stencil layer.

## Patentansprüche

1. Mehrschichtige Mikrofluid-Splittervorrichtung (550, 650) umfassend:
eine erste, eine Einlassöffnung (558, 658) bildende Vorrichtungsschicht (551, 651);
eine zweite, eine Mehrzahl von Auslassöffnungen (564A-564N, 666A-666N) bildende Vorrichtungsschicht (557, 655);
eine Mehrzahl von zwischen der ersten Vorrichtungsschicht und der zweiten Vorrichtungsschicht angeordneten Kanal-Vorrichtungsschichten (552, 554, 556), wobei jede Kanal-Vorrichtungsschicht (552, 554, 556) eine Mehrzahl von Zweigkanal-Segmenten (559A-559N, 561A-561N, 563A-563N, 660A-660N, 662A-662N, 664A-664N) definiert; und
eine Mehrzahl von Überlappungsbereichen (510A-510N, 610A-610N), wobei jeder Überlappungsbereich FluidKommunikation zwischen zumindest zwei Zweigkanal-Segmenten (559A-559N, 561A-561N, 563A-563N, 660A-660N, 662A-662N, 664A-664N), die in unterschiedlichen Vorrichtungsschichten (552, 554, 556) definiert sind, zulässt;
wobei die Zweigkanal-Segmente (559A-559N, 561A-561N, 563A-563N, 660A-660N, 662A-662N, 664A-664N) eine Mehrzahl von durchgehenden Strömungspfaden (600A-600N, 700A-700N) zwischen der Einlassöffnung und der Mehrzahl von Auslassöffnungen definieren, wobei jede der durchgehenden Strömungspfade (600A-600N, 700A-700N) eine Fluidimpedanz, eine Pfadlänge und eine geometrische Struktur besitzt; und
wobei die Fluidimpedanzen jedes der durchgehenden Strömungspfade (600A-600N, 700A-700N) der Mehrzahl von durchgehenden Strömungspfaden (600A-600N, 700A-700N) im Wesentlichen gleich sind.

2. Mehrschichtige Mikrofluid-Splittervorrichtung (550, 650) nach Anspruch 1, weiter umfassend zumindest eine Abstand-Vorrichtungsschicht (552, 554, 556) mit einer Mehrzahl von Aperturen (560A-560N, 562A-562N), wobei jede Apertur (560A-560N, 562A-562N) der Mehrzahl von Aperturen (560A-560N, 562A-562N) an einem Überlappungsbereich der Mehrzahl von Überlappungsbereichen (510A-510N, 610A-610N) angeordnet ist, wobei die zumindest eine Abstand-Vorrichtungsschicht (552, 554, 556) zumindest einen undurchlässigen Bereich (570) hat, der zwischen Abschnitten der zwei durchgehenden Strömungspfaden (600A-600N, 700A-700N) der Mehrzahl von durchgehenden Strömungspfaden (600A-600N, 700A-700N) angeordnet ist.

3. Mehrschichtige Mikrofluid-Splittervorrichtung (550, 650) nach Anspruch 1, wobei die Mehrzahl von Kanal-Vorrichtungsschichten (552, 554, 556) zumindest zwei kolineare durchgehende Strömungspfade (600A-600N, 700A-700N) aufweist, wobei die Vorrichtung weiter zumindest eine Abstand-Vorrichtungsschicht (552, 554, 556) aufweist, die eine Grenze (570) zwischen den zumindest zwei kolinearen Fluid-Strömungspfaden (600A-600N, 700A-700N) definiert.

4. Mehrschichtige Mikrofluid-Splittervorrichtung (550, 650) nach einem der vorangehenden Ansprüche, wobei jeder Überlappungsbereich der Mehrzahl von Überlappungsbereichen (510A-510N, 610A-610N) die anfängliche Strömung einer Flüssigkeit durch den Überlappungsbereich der Mehrzahl von Überlappungsbereichen (510A-510N, 610A-610N) verhindert.

5. Mehrschichtige Mikrofluid-Splittervorrichtung (550, 650) nach einem der vorangehenden Ansprüche, wobei die Pfadlängen jedes durchgehenden Strömungspfads (600A-600N, 700A-700N) der Mehrzahl von durchgehenden Strömungspfaden (600A-600N, 700A-700N) im Wesentlichen gleich sind.

6. Mehrschichtige Mikrofluid-Splittervorrichtung (550, 650) nach einem der vorangehenden Ansprüche, wobei die geometrische Struktur jedes durchgehenden Strömungspfads (600A-600N, 700A-700N) der Mehrzahl von durchgehenden Strömungspfaden (600A-600N, 700A-700N) im Wesentlichen topologisch symmetrisch ist.

7. Mehrschichtige Mikrofluid-Splittervorrichtung (550, 650) nach einem der vorangehenden Ansprüche, wobei die Mehrzahl von Auslassöffnungen (564A-564N, 666A-666N) ein zweidimensionales Array (564A-564N, 666A-666N) bildet.

8. Mehrschichtige Mikrofluid-Splittervorrichtung (550, 650) nach einem der vorangehenden Ansprüche, wobei die Kanal-Vorrichtungsschicht (552, 554, 556) der Mehrzahl von Kanal-Vorrichtungsschichten (552, 554, 556) aus einem Polymer-Material hergestellt ist.

9. Mehrschichtige Mikrofluid-Splittervorrichtung (550, 650) nach einem der vorangehenden Ansprüche, wobei eine der Kanal-Vorrichtungsschichten (552, 554, 556) der Mehrzahl von Kanal-Vorrichtungsschichten (552, 554, 556) aus einem selbstklebenden Material hergestellt ist.

10. Mehrschichtige Mikrofluid-Splittervorrichtung (550, 650) nach einem der vorangehenden Ansprüche, wobei zumindest eine der Mehrzahl von Kanal-Vorrichtungsschichten (552, 554, 556) eine Schablonenschicht ist.

## Revendications

1. Dispositif de séparation microfluidique multicouche (550,650) comprenant :
une première couche (551,651) du dispositif, définissant un orifice d'entrée (558,658);
une seconde couche (557,655) du dispositif, définissant une pluralité d'orifices de sortie (564A-564N, 666A-666N);
une pluralité de couches (552,554,556) du dispositif contenant un canal, disposées entre la première couche du dispositif et la seconde couche du dispositif, chaque couche (552,554,556) du dispositif contenant un canal définissant une pluralité de segments de canal de dérivation (559A-559N, 561A-561N, 563A-563N, 660A-660N, 662A-662N, 664A-664N); et
une pluralité de régions de chevauchement (510A-510N, 610A-610N), chaque région de chevauchement permettant une communication fluidique entre au moins deux segments de canal de dérivation (559A-559N, 561A-561N, 563A-563N, 660A-660N, 662A-662N, 664A-664N), définis dans différentes couches (552,554,556) du dispositif;
dans lequel les segments de canal de dérivation (559A-559N, 561A-561N, 563A-563N, 660A-660N, 662A-662N, 664A-664N) définissent une pluralité de trajets d'écoulement continu (600A-600N, 700A-700N) entre l'orifice d'entrée et la pluralité d'orifices de sortie, chaque trajet d'écoulement continu (600A-600N, 700A-700N) de la pluralité de trajets d'écoulement continu (600A-600N, 700A-700N) ayant une impédance fluidique, une longueur de trajet et une structure géométrique; et
dans lequel l'impédance fluidique de chaque trajet d'écoulement continu (600A-600N, 700A-700N) de la pluralité de trajets d'écoulement continu (600A-600N, 700A-700N) est essentiellement identique.

2. Dispositif de séparation microfluidique multicouche (550,650) selon la revendication 1, comprenant en outre au moins une couche entretoise (552,554,556) du dispositif définissant une pluralité d'ouvertures (560A-560N, 562A-562N), chaque ouverture (560A-560N, 562A-562N) de la pluralité d'ouvertures (560A-560N, 562A-562N) étant disposée dans une région de chevauchement de la pluralité de régions de chevauchement (510A-510N, 610A-610N), dans lequel la au moins une couche formant entretoise (552,554,556) comporte au moins une région imperméable (570) disposée entre des parties de deux trajets d'écoulement continu (600A-600N, 700A-700N) de la pluralité de trajets d'écoulement continus (600A-600N, 700A-700N).

3. Dispositif de séparation microfluidique multicouche (550,650) selon la revendication 1, dans lequel la pluralité de couches (552,554,556) du dispositif contenant un canal incluent au moins deux trajets colinéaires d'écoulement continu (600A-600N,700A-700N), le dispositif comprenant en outre au moins une couche entretoise (552,554,556) du dispositif définissant une limite (570) entre les au moins deux trajets colinéaires d'écoulement de fluide (600A-600N,700A-700N).

4. Dispositif de séparation microfluidique multicouche (550,650) selon l'une quelconque des revendications précédentes, dans lequel chaque région de chevauchement parmi la pluralité de régions de chevauchement (510A-510N, 610A-610N) empêche un écoulement initial d'un liquide à travers la région de chevauchement de la pluralité de régions de chevauchement (510A-510N, 610A-610N).

5. Dispositif de séparation microfluidique multicouche (550,650) selon l'une quelconque des revendications précédentes, dans lequel la longueur de trajet de chaque trajet d'écoulement continu de la pluralité de trajets d'écoulement continu (600A-600N, 700A-700N) est essentiellement la même.

6. Dispositif de séparation microfluidique multicouche (550,650) selon l'une quelconque des revendications précédentes, dans lequel la structure géométrique de chaque trajet d'écoulement continu parmi la pluralité de trajets d'écoulement continu (600A-600N, 700A-700N) est essentiellement symétrique du point de vue topologique.

7. Dispositif de séparation microfluidique multicouche (550,650) selon l'une quelconque des revendications précédentes, dans lequel la pluralité d'orifices de sortie (564A-564N, 666A-666N) forment un réseau bidimensionnel (564A-564N, 666A-666N).

8. Dispositif de séparation microfluidique multicouche (550,650) selon l'une quelconque des revendications précédentes, dans lequel chaque couche (552,554,556) du dispositif contenant un canal de la pluralité de couches (552,554,556) du dispositif contenant un canal est réalisée en matériau polymère.

9. Dispositif de séparation microfluidique multicouche (550,650) selon l'une quelconque des revendications précédentes, dans lequel toutes les couches (552,554,556) du dispositif contenant un canal de la pluralité de couches (552,554,556) du dispositif contenant un canal sont réalisées avec une bande autoadhésive.

10. Dispositif de séparation microfluidique multicouche (550,650) selon l'une quelconque des revendications précédentes, dans lequel au moins une couche de la pluralité de couches (552,554,556) contenant un canal est une couche de stencil.
